# EUROPEAN PATENT SPECIFICATION

(11) **EP 3 227 662 B1**
(45) Date of publication and mention of the grant of the patent: **12.07.2023**
(21) Application number: 15865108.3
(22) Date of filing: 03.11.2015
(51) Int. Cl.: G01N 15/14, G01N 15/10, G01N 15/00

(54) **FLOW CYTOMETRY CELL SORTING SYSTEMS AND METHODS OF USING THE SAME**
DURCHFLUSSZYTOMETRIEZELLSORTIERUNGSSYSTEME UND VERFAHREN ZUR VERWENDUNG DAVON
SYSTÈMES DE TRI DE CELLULES DE CYTOMÉTRIE DE FLUX ET LEURS PROCÉDÉS D'UTILISATION

(30) Priority: 04.12.2014 US 201462087662 P
(43) Date of publication of application: 11.10.2017
(73) Proprietor: Becton, Dickinson and Company, Franklin Lakes, NJ 07417-1880 (US)
(72) Inventor: AZERSKY, Vladimir, San Jose, California 95123 (US); FAINSHTEIN, Alexander, San Jose, California 95134 (US)
(74) Representative: Duxbury, Stephen
(86) International application number: PCT/US2015/058842
(87) International publication number: WO 2016/089521

(56) References cited:
- US-A- 4 148 718
- US-A1- 2009 061 513
- US-A1- 2011 176 127
- US-A1- 2012 277 902
- US-A1- 2014 176 704
- US-A1- 2014 307 940
- US-A1- 2014 307 940

## Description

### INTRODUCTION

Flow cytometry is a valuable method for the analysis and isolation of biological particles such as cells and constituent molecules. As such it has a wide range of diagnostic and therapeutic applications. The method utilizes a fluid stream to linearly segregate particles such that they can pass, single file, through a detection apparatus. Individual cells can be distinguished according to their location in the fluid stream and the presence of detectable markers. Thus, a flow cytometer can be used to produce a diagnostic profile of a population of biological particles.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops and the drops containing particles of interest are electrically charged and deflected into a collection tube by passage through an electric field.

The linearly segregated particles in the stream may be characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left uncharged. The charged drop may be deflected from the downward trajectory of the other drops by an electrical field and collected in a suitable container, while the uncharged drops fall directly into a drain. Droplet sorters deflect drops that contain cells of interest by applying a charge (typically 50-150 volts) to the drops. The drops are deflected by an electrostatic field and, depending on the charge, follow different trajectories so that they arrive at a collection container. The cells can be distributed over multiple groups by applying different charges, each discrete charge guiding a drop to a container.

In some applications it is desired to employ a mute-well tray as the container into which sorted drops are deposited, e.g., so that each sorted drop can be sorted into its own individual container. With respect to systems using multi-well trays, the systems are configured to move the tray relative to the sort location so that sorted droplets can be deposited into individual wells (e.g., containers) of the multi-well tray. Movement of the tray relative to the sort location is currently implemented via 'stop and go' motion profile, where the tray is moved to the certain position in space and stops, following which the sort commences. The tray is then moved to the next position and so on.

US 2009/0061513 A1 discloses a method of cell seeding comprising providing a cell sample, seeding a cell of the cell sample into a microplate well having at least 5 wells/cm². This document also discloses a method of cell cultivation comprising seeding a cell into a microplate using the cell seeding method, incubating the microplate and analyzing the contents of one well of the microplate.

In accordance with its abstract, US 2014/307940 A1 states 'Apparatus and methods are described for automatically performing set-up steps for flow cytometry operations. The invention provides for the spatial determination of a flow stream and the subsequent automatic alignment of analysis devices and/or collection vessels. The automatic determination of flow stream properties provides for the automatic configuration flow cytometer parameters'

### SUMMARY

A System for sorting cells is provided in accordance with the claims. A methods for sorting cells in accordance with claim 13 is also provided.

### BRIEF DESCRIPTION OF THE FIGURES

It is understand that the drawings, described below, are for illustration purposes only. The drawings are not intended to limit the scope of the present teachings in any way.

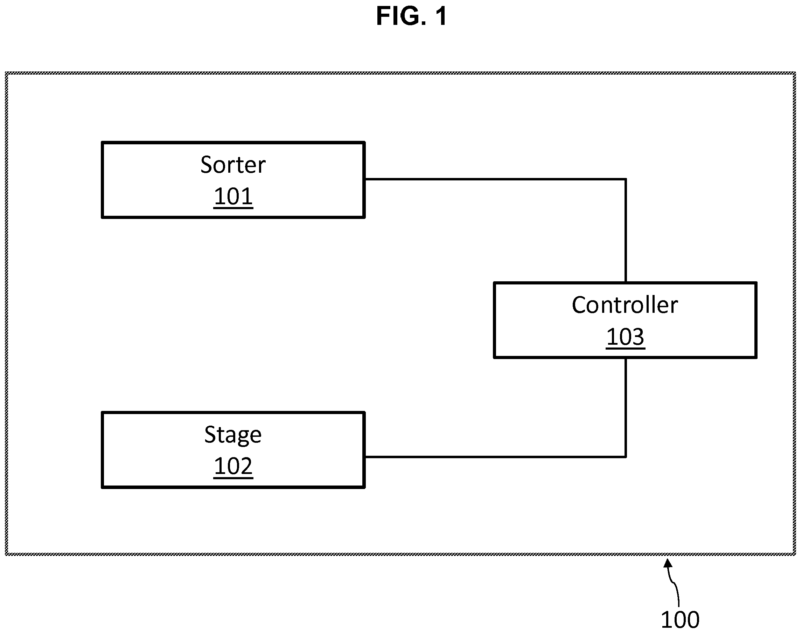

Figure 1 depicts a block diagram of a system (100) including a sorter instrument (101), a support stage (102), bearing a container and able to move continuously with respect to the sorter, and a controller (103) that coordinates interaction between the sorter and the stage.

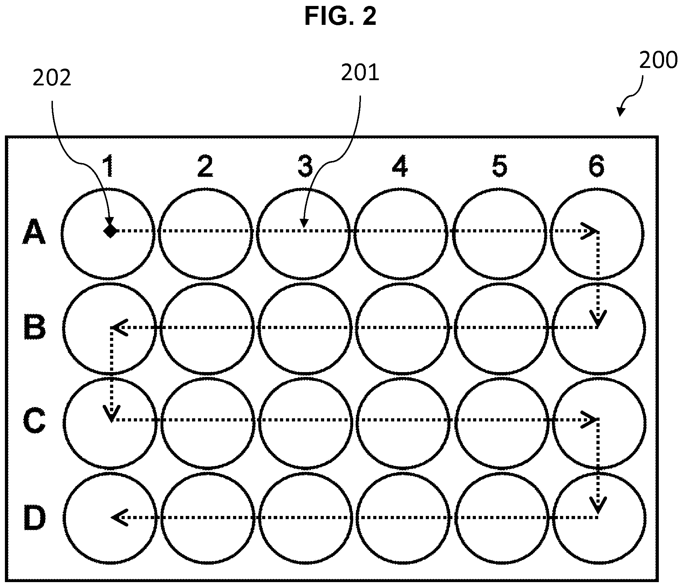

Figure 2 depicts a schematic of a 24-well tray (200) as viewed from above. The dashed line (201) shows a trajectory of a sorter's nozzle with respect to the tray, in a stop-and-go design. The trajectory starts at the center 202 of well A1 and finishes at D1.

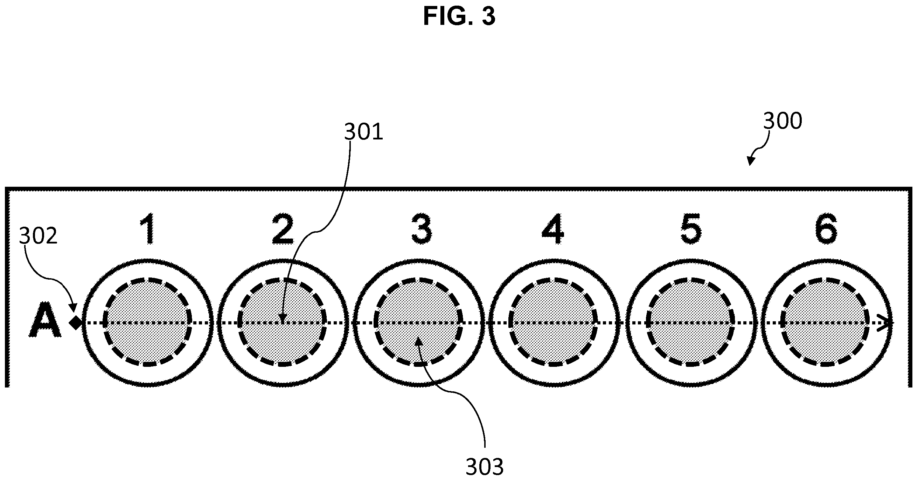

Figure 3 depicts a schematic of a fragment of 24-well tray (300) and a fragment of a trajectory (dashed line 301) of the sorter's nozzle that corresponds to the droplet receiving location. This fragment of the trajectory starts at point 302, to the left of well A1 and extends past the well A6. Shaded areas 303 mark the regions where depositing a drop into the well is possible and reliable. When the sorter's nozzle is aligned inside such areas, the sorter receives a command from the controller providing for deposition of a drop (e.g., via droplet deflection).

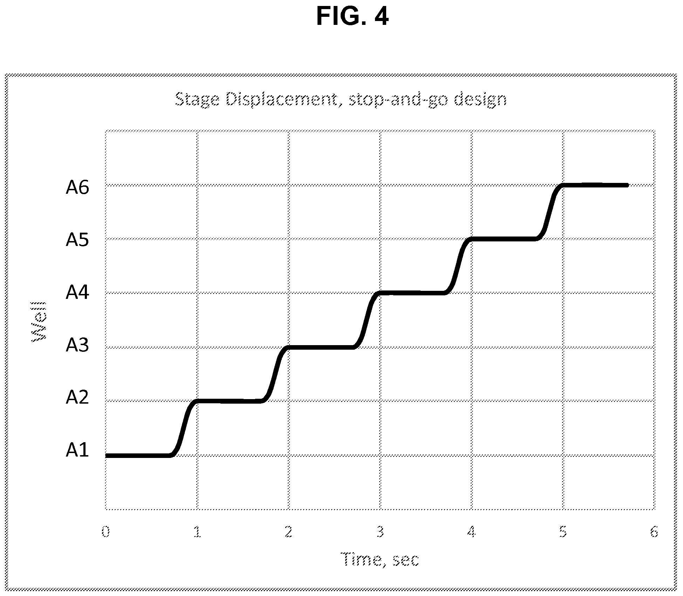

Figure 4 illustrates the displacement of the stage along one axis in a stop-and-go trajectory. At time 0, the nozzle is aligned with the center of the first well, A1. It rests there for about 0.75 sec, then in 0.25 sec moves to the center of A2, rests again for 0.75 sec and so on. To process 6 wells, it takes almost 6 sec.

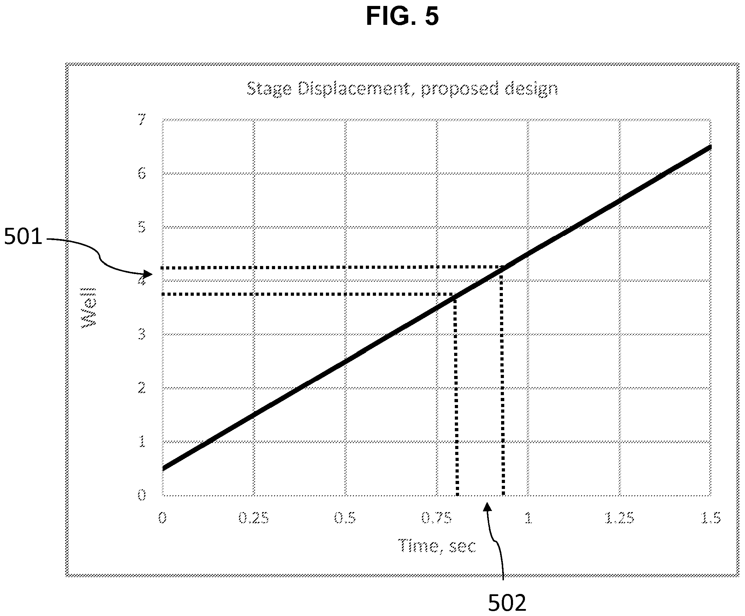

Figure 5 illustrates a continuous displacement trajectory of the stage along one axis over time. The sorter's nozzle starts aligned at the left edge of well A1 and move continuously to the right edge of well A6, with the same speed as it moves in the existing stop-and-go implementation. Now it takes four times less time, 1.5 sec, to process 6 wells. Region 501 on the vertical axis between the two dashed lines shows displacement range where depositing cells into well A4 is reliable. Region 502 on the horizontal axis between the two dashed lines shows corresponding time interval, approximately 0.5 sec.

### DEFINITIONS

Before describing exemplary embodiments in greater detail, the following definitions are set forth to illustrate and define the meaning and scope of the terms used in the description.

Unless defined otherwise, all technical and scientific terms used herein have the same meaning as commonly understood by one of ordinary skill in the art to which this invention belongs. Singleton, et al., DICTIONARY OF MICROBIOLOGY AND MOLECULAR BIOLOGY, 2D ED., John Wiley and Sons, New York (1994), and Hale & Markham, THE HARPER COLLINS DICTIONARY OF BIOLOGY, Harper Perennial, N.Y. (1991) provide one of skill with the general meaning of many of the terms used herein. Still, certain terms are defined below for the sake of clarity and ease of reference.

It must be noted that as used herein and in the appended claims, the singular forms "a", "an", and "the" include plural referents unless the context clearly dictates otherwise. For example, the term "a primer" refers to one or more primers, i.e., a single primer and multiple primers. It is further noted that the claims can be drafted to exclude any optional element. As such, this statement is intended to serve as antecedent basis for use of such exclusive terminology as "solely," "only" and the like in connection with the recitation of claim elements, or use of a "negative" limitation.

A "processor" references any hardware and/or software combination that will perform the functions required of it. For example, any processor herein may be a programmable digital microprocessor such as available in the form of an electronic controller, mainframe, server or personal computer (desktop or portable). Where the processor is programmable, suitable programming can be communicated from a remote location to the processor, or previously saved in a computer program product (such as a portable or fixed computer readable storage medium, whether magnetic, optical or solid state device based). For example, a magnetic medium or optical disk may carry the programming, and can be read by a suitable reader communicating with each processor at its corresponding station.

A "computer-based system" refers to the hardware means, software means, and data storage means used to analyze the information of the present invention. The minimum hardware of a computer-based system includes a central processing unit (CPU), input means, output means, and data storage means. Any convenient computer-based systems may be used. The data storage means may include any manufacture including a recording of the present information as described herein, or a memory access means that can access such a manufacture.

As used herein, the term "record" data, programming or other information on a computer readable medium refers to a process for storing information, using any convenient methods. Any convenient data storage structure may be chosen, based on the means used to access the stored information. A variety of data processor programs and formats can be used for storage, e.g., word processing text file, database format, etc.

As used herein, the term "sample" relates to a material or mixture of materials, in some cases in liquid form, containing one or more analytes of interest. In some embodiments, the term as used in its broadest sense, refers to any plant, animal or bacterial material containing cells or producing cellular metabolites, such as, for example, tissue or fluid isolated from an individual (including without limitation plasma, serum, cerebrospinal fluid, lymph, tears, saliva and tissue sections) or from in vitro cell culture constituents, as well as samples from the environment. The term "sample" may also refer to a "biological sample". As used herein, the term "a biological sample" refers to a whole organism or a subset of its tissues, cells or component parts (e.g. body fluids, including, but not limited to, blood, mucus, lymphatic fluid, synovial fluid, cerebrospinal fluid, saliva, amniotic fluid, amniotic cord blood, urine, vaginal fluid and semen). A "biological sample" can also refer to a homogenate, lysate or extract prepared from a whole organism or a subset of its tissues, cells or component parts, or a fraction or portion thereof, including but not limited to, plasma, serum, spinal fluid, lymph fluid, the external sections of the skin, respiratory, intestinal, and genitourinary tracts, tears, saliva, milk, blood cells, tumors and organs. In certain embodiments, the sample has been removed from an animal or plant. Biological samples may include cells. The term "cells" is used in its conventional sense to refer to the basic structural unit of living organisms, both eukaryotic and prokaryotic, having at least a nucleus and a cell membrane. In certain embodiments, cells include prokaryotic cells, such as from bacteria. In other embodiments, cells include eukaryotic cells, such as cells obtained from biological samples from animals, plants or fungi.

As used herein, the terms "determining," "measuring," and "assessing," and "assaying" are used interchangeably and include both quantitative and qualitative determinations.

As used herein the term "isolated," refers to an moiety of interest that is at least 60% free, at least 75% free, at least 90% free, at least 95% free, at least 98% free, and even at least 99% free from other components with which the moiety is associated with prior to purification.

A "plurality" contains at least 2 members. In certain cases, a plurality may have 10 or more, such as 100 or more, 1000 or more, 10,000 or more, 100,000 or more, 10⁶ or more, 10⁷ or more, 10⁸ or more or 10⁹ or more members.

Numeric ranges are inclusive of the numbers defining the range.

The term "separating", as used herein, refers to physical separation of two elements (e.g., by size or affinity, etc.) as well as degradation of one element, leaving the other intact.

The methods described herein include multiple steps. Each step may be performed after a predetermined amount of time has elapsed between steps, as desired. As such, the time between performing each step may be 1 second or more, 10 seconds or more, 30 seconds or more, 60 seconds or more, 5 minutes or more, 10 minutes or more, 60 minutes or more and including 5 hours or more. In certain embodiments, each subsequent step is performed immediately after completion of the previous step. In other embodiments, a step may be performed after an incubation or waiting time after completion of the previous step, e.g., a few minutes to an overnight waiting time.

Other definitions of terms may appear throughout the specification.

In further describing the subject invention, systems are described first in greater detail. Next, computer readable media that may be used in the subject systems are reviewed. Methods of interest in which the subject systems find use are also described.

### CELL SORTING SYSTEMS

Aspects of the disclosure include systems for sorting cells and methods for using the same. In some instances, the system is a flow cytometer system having a flow channel loaded with a sample including a mixture of cells, which cells pass substantially one at a time through a sensing region where the cells are detected and/or identified (i.e., analyzed). This flow stream of analyzed cells may then be sorted to deliver a desired population of analyzed cells to a cell receiving location, while the remainder of the flow stream is discarded or separately collected.

As such, the system includes a cell sorter that directs desirable analyzed cells to the cell receiving location (i.e., cell sorting), where there is configured a continuously moving support stage positioned to collect the desirable analyzed cells into the multiple containers of a tray mounted on the support stage. A support stage that moves with continuous motion may provide for a longer lifetime of mechanical parts and/or less system maintenance because of reduced wear on the motors and other mechanical parts of the moving mechanism of the support stage that occurs for continuously moving stages as compared to stages that move with stop-and-go motion (e.g., motion that includes periods where the velocity is 0 wells/sec). The system may include a controller which synchronizes the continuous motion of the multi-well tray with the sequential delivery of cells from the cell sorter. The logic of the controller identifies timeslot(s) in the trajectory of the container during which an analyzed cell can be collected in particular containers(s) according to the position of the multi-well tray as it moves along the trajectory. When such a timeslot begins the collection of a cell in a container is possible and an appropriate command is issued to the sorting mechanism of the cell sorter to actually direct a desirable cell (e.g., by deflecting a drop containing the cell) to a cell receiving location. When the timeslot is over the controller may issue a command to prevent cell sorting. In some cases, the controller may issue a command to prevent cell sorting when a desired number of droplets and/or cells have been collected in a container, whether or not a particular timeslot is over.

The system is a system for sorting cells, including: a cell sorter configured to produce an analyzed stream of droplets and comprising a deflector capable of deflecting an analyzed droplet from the analyzed stream of droplets to a deflected droplet receiving location; a support stage comprising a container and configured to continuously move in two dimensions; and a processor operably coupled to a memory that includes instructions stored thereon to determine the alignment of the container with the deflected droplet receiving location and send a deflection signal to the cell sorter when the container is aligned with the deflected droplet receiving location.

### Cell Sorter

The subject system includes a cell sorter capable of separating and isolating a desirable cell population from a sample. Any convenient cell sorters for analyzing and/or separating target particles (e.g., cells) may find use in the subject systems, such as cell sorters capable of mechanical sorting, electrostatic sorting, or magnetic sorting. In some instances, the cell sorter is part of a flow cytometer system. In certain instances, the system is configured to produce a stream of droplets, where the droplets contain analyzed cells. Diversion of a droplet of interest to a receiving location may be achieved by the cell sorter via electrostatic charging of the droplet and deflection of the charged droplet from the flow stream by the application of an electrostatic field. Such electrostatic fields may be created by deflector plates positioned adjacent to the flow stream. As used herein, the terms "deflection" or "deflected" refer to the electrostatic deflection of droplets of interest from an analyzed flow stream of droplets, whereby the cell sorter may identify and track cells of interest in the flow stream and divert only those droplets of the flow stream that include those cells of interest to be collected by a container. In some instances, the system is configured to deflect a single droplet into each container.

The cell sorter is configured to produce an analyzed stream of droplets and deflect an analyzed droplet from the analyzed stream of droplets to a deflected droplet receiving location. As such, the cell sorter may include a deflector capable of deflecting an analyzed droplet from a stream of droplets to a deflected droplet receiving location. As used herein, the term "deflected droplet receiving location" refers to a location in the system where a sorted droplet containing a cell of interest may be collected after it has been deflected by the cell sorter. In some cases, the cell sorter may deflect a droplet of interest via an optional nozzle to a collection container. The nozzle may be configured above (i.e. orthogonally along a z axis) a support stage that holds the container, where the support stage is configured to move continuously (i.e., in the x-y plane). The deflected droplet receiving location corresponds to the position in the x-y plane defined by the support stage where the z axis defined by the flow stream of deflected droplets intersects. As the support stage continuously moves, so does the deflected droplet receiving location in the x-y plane.

Only the deflection of droplets of interest by the cell sorter leads to the collection of sample material at the deflected droplet receiving location. If a single container were positioned at the deflected droplet receiving location then the container would be positioned to collect an enriched population of analyzed cells of interest from the cell sorter. In some cases, non-deflected droplets follow a flow stream of the cell sorter that is not influenced by an electric field, or a flow stream that is influenced by the application of an electric field having a polarity and/or strength that prevents deflection to the droplet receiving location. Non-deflected droplets may be discarded or separately collected.

Cells of interest may be targeted for separation from the flow stream of a cell sorter according to a variety of parameters, such as a phenotypic characteristic identified via the attachment of a particular fluorescent label to cells of interest. Any convenient cells may be targeted for deflection in the cell sorter of the subject system. In some embodiments, the system is configured to deflect analyzed droplets that are determined to include a target cell.

### Support Stage

The system includes a support stage for mounting container(s).The support stage may be any convenient mounting device configured to hold in place a container(s) and to move the container(s) relative to a flow stream of a cell sorter. The support stage may include a planar substrate, a contoured mounting device, cylindrical or tubular support structures, or laser or LED holders, among other types of support structures. In some instances, the support stage is a mount for a multi-well tray. As used herein the term "multi-well tray" and "multi-well plate" are used interchangeably to refer to a two-dimensional array of collection containers, e.g., wells, vials, tubes, etc. that may be configured in any convenient format. Multi-well trays of interest include, but are not limited to, a construct including a configuration of wells, tubes and/or vials arranged in a series of rows and columns in a X-Y plane (e.g., 2×3, 2×6, 3×4, 8×12, 16×24), such as 12-well, 24-well, 96-well and 384-well plates or trays of containers. As used herein, the term "container" refers to a discrete container that may be one of an arrangement of containers (e.g., wells, vials, tubes, etc. in a multi-well tray). Depending on the number of containers in the subject systems, the number of support stages may vary, as desired, such as two or more, three or more, or four or more stages and including five or more support stages. In certain embodiments, systems of interest include one support stage, such as a support stage having a mounted container, e.g., a mounted multi-well tray. In certain embodiments, the support stage includes two or more mounted containers, such as 6 or more, 12 or more, 24 or more, 48 or more, 96 or more or 384 or more discrete mounted containers.

The support stage is movable. The support stage is moved continuously to adjust the alignment of the container with the flow stream of analyzed cells of interest from the cell sorter. As used herein, by "continuous" movement is meant that the support stage does not rest (i.e., have a velocity of 0) at a particular location during a period of continuous movement when cells are being sorted and collected. The continuous movement of the support stage may be linear, curved or angular and may involve one or more changes in direction of movement. In some instances, the support stage moves continuously with a constant speed. In certain cases, the support stage moves continuously with varying speed, where the speed of the support stage may in some instances not drop below a suitable threshold. In such cases, the speed of the support stage may be an average speed. In certain embodiments, the support stage moves continuously with a speed of 0.2 wells/sec or more, 0.5 wells/sec or more, 1 well/sec or more, such as 2 wells/sec or more, 3 wells/sec or more, 4 wells/sec or more, 5 wells/sec or more, 6 wells/sec or more, 7 wells/sec or more, 8 wells/sec or more, 9 wells/sec or more, or even 10 wells/sec or more. The speed of continuous movement may change during the trajectory of the support stage depending on a variety of factors, such as the spacing of containers in a multi-well tray and the frequency of sorted drops, etc. In certain instances, the support stage moves continuously, but with changes in velocity (i.e., changes in direction of movement).

As used herein, the term "alignment" refers to the relative positions of the container(s) mounted on the support stage with a receiving location for the flow stream of analyzed cells. The support stage is said to be aligned with the deflected droplet receiving location when a container mounted on the stage is capable of receiving or collecting a deflected droplet of interest from the cell sorter. The support stage is continuously movable in two dimensions, such as in an X-Y plane orthogonal to the axis of the flow stream of analyzed cells (e.g., Z axis) of interest from the cell sorter. As such, the support stage may be configured to sequentially align the wells of a multi-well tray with the deflected droplet receiving location, while the support stage is continuously moving. The term "continuously move in two dimensions" is meant to encompass linear movements in the x-y plane, such as movement in an x dimension (e.g., as described in Figure 3 along row A, A1 to A6), followed by linear movement in a y direction (e.g., from row A to row B), followed by linear movement in a x direction (e.g., along row B, from B6 to B1 or B1 to B6), etc. In some instances, the support stage includes two or more containers and the system is configured to automatically and sequentially align the two or more containers with the deflected droplet receiving location in the Z dimension via continuous movement of the support stage in the X-Y plane.

Figure 3 illustrates a trajectory (301) that represents the alignment of the defected droplet receiving location with a multi-well tray mounted on a support stage that is continuously moving with respect to the cell sorter. Figure 5 illustrates the spatial (region 501) and temporal (region 502) alignment of well A4 (figure 3) with the defected droplet receiving location as the stage continuously moves. For simplicity, regions corresponding to the spatial and temporal alignment of wells A1-A3, A5 and A6 (figure 3) with the defected droplet receiving location are not indicated on the graph.

In some instances, the support structure is movable in three dimensions. The support stage is configured to be moved continuously . The support stage is movable by continuous motion during the time when the mounted multi-well tray is receiving or collecting droplets from the cell sorter.

The support stage is configured not to move in discrete intervals during the collection of cells from the cell sorter, e.g., not to move with a stop-and-go motion as depicted by the graph in Figure 4. In examples not falling under the scope of the claims, the support stage is movable in discrete intervals, such as for example in 0.01 micron or greater increments, such as 0.05 micron or greater, such as 0.1 micron or greater, such as 0.5 micron or greater, such as 1 micron or greater, such as 10 micron or greater, such as 100 microns or greater, such as 500 microns or greater, such as 1 mm or greater, such as 5 mm or greater, such as 10 mm or greater and including 25 mm or greater increments.

Any displacement protocol may be employed to move the support structures, such as moving the support stages with a motor actuated translation stage, leadscrew translation assembly, geared translation device, such as those employing a servo motor, brushless electric motor, brushed DC motor, among other types of motors.

In certain embodiments, the subject systems are configured to assess alignment of the container and/or support stage, directly or indirectly, with the deflected droplet receiving location. Any convenient components and methods may be utilized to assess alignment. In some embodiments, the subject systems include one or more photodetectors for detecting light signals that indicate the alignment. Photodetectors in the subject systems may be any convenient positional sensing detecting protocol, including but not limited to photosensors or photodetectors, such as active-pixel sensors (APSs), quadrant photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. The relative positioning of all containers mounted on a support stage may be mapped relative to the natural flow stream or a flow stream receiving location of a cell sorter by assessing the relative alignment or positioning of any one point of the support stage.

### Controller

The subject systems may include a controller which synchronizes the continuous motion of the support stage (and thus a mounted multi-well tray) with the delivery of cells from the cell sorter. In some embodiments, a computer program product is described including a computer usable medium having control logic stored therein. The control logic, when executed by the processor of the computer, causes the processor to perform functions described herein. The logic of the controller may identify timeslot(s) in which an analyzed cell could be directed to a particular well and collected according to the relative positioning of the multi-well tray as it moves. As used herein, the term "synchronize" refers to a process whereby the diversion of a flow stream of interest to a receiving location occurs only when a container is suitably positioned to receive the diverted flow stream. A container is considered to be positioned at the receiving location any time that liquid diverted from the flow stream to that location would be collected inside the mouth of the container. As used herein, the term "timeslot" refers to a time period during a trajectory of the support stage when one discrete mounted container is in a suitable position to receive and collect the diverted flow stream of a cell sorter (e.g., to receive a deflected droplet at a deflected droplet receiving location). In some cases, the trajectory of the support stage is determined by plotting the relative positioning of a deflected droplet receiving location (projected from an orthogonal z axis) with the (e.g., proposed) continuous movement of the stage in the x-y plane.

Any convenient controller devices may be utilized in the subject systems. The controller may be operably coupled to the support stage and/or the cell sorter and provide instructions for carrying out the functions of the system (e.g., as described herein). In some embodiments, the system includes a processor operably coupled to a memory that includes instructions stored thereon to determine the temporal and spatial alignment of a container with the deflected droplet receiving location. Figure 5 illustrates a determined period of spatial (region 501) and temporal (region 502) alignment (i.e., timeslots) of a well A4 (figure 3) with the defected droplet receiving location as the support stage continuously moves. For simplicity, regions corresponding to the periods of spatial and temporal alignment of wells A1 -A3, A5 and A6 (Figure 3) with the defected droplet receiving location are not indicated on the graph. As the stage continuously moves, the periods of spatial and temporal alignment (i.e., timeslots) during which a deflected cell may be collected at the particular locations of the multi-well tray may be dependent on a number of variables, as desired. Variables such as the velocity and proposed trajectory of the support stage, the mouth width of the particular containers used (e.g., well, tube, or vial), and the distance and/or time delay between cell sorting and cell collection, may be taken into account to determine regions of spatial and temporal alignment.

In some instances, the instructions include mapping a trajectory of the support stage relative to the deflected droplet receiving location, and determining the timeslots during which multiple containers mounted on the support stage would be suitably positioned to receive deflected cells. As such, timeslots refer to time periods when containers are spatial aligned with the deflected droplet receiving location. In some instances, determining the temporal and spatial alignment of a container includes instructions to determine the trajectory of the support stage relative to the deflected droplet receiving location and instructions to determine regions of temporal and spatial alignment for each container. In certain embodiments, a container is one well of a multi-well tray mounted on the support stage.

The system may be configured to synchronize the delivery of cells from the cell sorter with the suitable positioning of a container to receive a deflected droplet. In some cases, the system is configured to deflect droplets of interest only when a container is in a suitable position to receive the droplet. In some embodiments, the system includes a processor operably coupled to a memory that includes instructions stored thereon to send a deflection signal to the cell sorter when the container is aligned with the deflected droplet receiving location. A container is considered to be aligned with a deflected droplet receiving location when the container is temporally and spatially present at the receiving location such that it can receive a drop deflected to the deflected droplet receiving location. The processor may be configured to control the deflector of the cell sorter according to executable instructions stored in a memory which provide for a desired number of droplets to be deflected during each timeslot. By deflection signal is meant any convenient direct or indirect instruction(s) or signal(s) that configure the cell sorter to deflect a droplet of interest, if present, to the deflected droplet receiving location during a desired period of time (e.g., a timeslot). The deflection signal may be divided into two or more parts or sub-signals, which may operate to initiate deflection or to prevent further deflection.

In some embodiments of the system, the deflection signal includes an initial deflection sub-signal and a final deflection sub-signal. The memory may include instructions for producing the deflection signal by sending an initial deflection sub-signal to the cell sorter at the beginning of the timeslot that configures the deflector to deflect an analyzed droplet, when present. The instructions for producing the deflection signal further include sending a final deflection sub-signal to the cell sorter at the end of the timeslot that configures the deflector not to deflect an analyzed droplet. In some embodiments of the system, the instructions for producing the deflection signal further include sending a final deflection sub-signal to the cell sorter after a single analyzed droplet has been deflected during the timeslot, wherein the final deflection signal configures the deflector not to deflect an analyzed droplet. In some cases, where the system is configured to deflect a target number of droplets per container, a final deflection sub-signal is sent during the timeslot to prevent further deflected droplets from being deflected to the deflected droplet receiving location. In certain instances, the system is configured to deflect 5 droplets or less per container, such as 5, 4, 3, 2 or 1 droplets per container.

A flow cytometer system includes a cell sorter that may provide for a frequency of deflected droplets dependent on a variety of factors, such as the concentration of cells of interest in the sample, the velocity and volume of the flow stream, the means of detecting and/or identifying cells in the flow stream and the means of droplet formation. Whether or not a droplet containing cells of interest is available for deflection during a timeslot depends on the frequency of such cells in the flow stream of analyzed droplets and on the frequency of the timeslots during which a container in in suitable position at the deflected droplet receiving location. The frequency of timeslots is dependent on a variety of factors, such as the velocity and proposed trajectory of the support stage, the mouth width of the particular containers used (e.g., well, tube, or vial) and the spacing between containers on the support stage. In some cases, multi-well trays of interest have a regular spacing between wells which provides for a consistent timeslot frequency during continuous movement of the support stage. In some embodiments, the support stage includes multiple containers and the system is configured to automatically and sequentially align the two or more containers with the deflected droplet receiving location in the Z dimension via continuous movement of the support stage in the X-Y plane.

The processor may be configured to control the continuous movement of the support stage according to executable instructions stored in a memory which takes into account the frequency of deflected droplets from the cell sorter when determining regions of spatial and temporal alignment and parameters which control the same. As such, in some instances of the system, the memory includes an algorithm for determining a frequency of deflected droplets from the cell sorter. The memory may include an algorithm for matching the length and/or frequency of the timeslot(s) with the frequency of deflected droplets whereby the cell sorter is determined to deflect a single drop during the timeslot. As used herein, the term "matching" refers to an algorithm which takes into account a determined frequency of deflected droplets from the cell sorter when selecting one or more parameters that control the continuous movement of the support stage, such as velocity of movement and spatial pathway in an x-y plane, and thus provide for a desirable length and/or frequency of timeslots. As such, in some cases, instructions for determining regions of spatial and temporal alignment of the multiple containers with the deflected droplet receiving location include selecting a desirable frequency of the timeslot(s). In some cases, the proposed spatial pathway of the support stage in the x-y plane relative to the deflected droplet receiving location (z-axis) may be selected by default according to the configuration of a multi-well tray (see e.g., Figure 3). In such cases, the instructions may include an algorithm to automatically select a desirable support stage velocity to provide a frequency of timeslots that matches a determined frequency of droplet deflection from the cell sorter. It is further understood that the continuous movement of the support stage may be adjusted in response to a change in conditions, such as a change in the frequency of deflected cells from the cell sorter, or a change in the desired number of deflected cells per container. Any convenient parameters of the system may be automatically adjusted in response to a change in conditions and/or desired parameters. In some instances, the memory includes instructions for automatically adjusting the velocity of the support stage (e.g., along a set spatial pathway) in response to a change in the frequency of deflected droplets from the cell sorter. Thus, if the frequency of deflected droplets decreases by a factor of 2, then the memory may include instructions to decrease the velocity of the support stage thereby decreasing the frequency of timeslots by a similar factor of 2. In some instances, the memory includes instructions for automatically adjusting one or more parameters of the cell sorter to provide for a frequency of deflected drops that matches the frequency of timeslots during which droplets may be collected. Cell sorter parameters of interest that may be automatically adjusted include, but are not limited to, sheath fluid pressure, droplet charging voltage, deflection plate voltage, charge correction value, drop delay, drop drive frequency, drop amplitude and charge phase.

Memory may be any suitable device in which the processor can store and retrieve data, such as magnetic, optical, or solid state storage devices (including magnetic or optical disks or tape or RAM, or any other suitable device, either fixed or portable). The processor may include a general purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. The subject systems also include programming, e.g., in the form of computer program products, computer-readable medium, algorithms, etc. for use in controlling the subject systems and practicing the methods as described herein.

### COMPUTER-READABLE MEDIUM

Also disclosed is a computer-readable medium including a memory that includes instructions (e.g., as described herein) stored thereon. The instructions and algorithms described herein can be recorded on any convenient computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

In some embodiments, the instructions include: instructions for moving a support stage comprising a container continuously in the X-Y plane; an algorithm for determining the temporal and spatial alignment of the container with the deflected droplet receiving location; and instructions for sending a deflection signal to a cell sorter when the container is aligned with a deflected droplet receiving location, where the cell sorter includes a deflector capable of deflecting an analyzed droplet from an analyzed stream of droplets to the deflected droplet receiving location.

In certain embodiments, the memory includes instructions for determining a timeslot during which the container is aligned with the deflected droplet receiving location. In some instances, the deflection signal includes an initial deflection sub-signal and a final deflection sub-signal; and the memory includes instructions for producing the deflection signal by sending an initial deflection sub-signal to the cell sorter at the beginning of the timeslot that configures a deflector to deflect an analyzed droplet, when present. In certain instances, the memory further includes instructions for producing the deflection signal by sending a final deflection sub-signal to the cell sorter at the end of the timeslot that configures the deflector not to deflect an analyzed droplet. In some cases, the memory further includes instructions for sending a final deflection sub-signal to the cell sorter after a single analyzed droplet has been deflected during the timeslot that configures the deflector not to deflect an analyzed droplet. In certain cases, the instructions may provide for collection of two or more analyzed droplets in a container during a timeslot.

In some embodiments, the memory includes instructions for automatically and continuously moving the support stage in the X-Y plane to sequentially align the two or more containers with the deflected droplet receiving location in the Z dimension. In certain embodiments, the memory includes an algorithm for matching the length of the timeslot with the frequency of deflected droplets whereby the cell sorter is determined to deflect a single drop during the timeslot.

In some instances, the memory includes instructions for adjusting the velocity of the support stage in response to a change in the frequency of deflected droplets from the cell sorter.

### FLOW CYTOMETERS

In certain embodiments, the system includes a flow cytometer. In some instances of such embodiments, the subject system may be configured to detect the deflection and or collection of a droplet from a flow stream, e.g., by light scattering. Forward scattered light may be collected from an irradiated flow stream and by one or more forward scatter detectors. In certain embodiments, the forward scatter detectors are positioned on the opposite side of the flow stream from the light source and are positioned to collect and detect forward scattered light. In certain embodiments, the subject systems are configured to assess alignment with the flow stream by detecting light signals from light propagated upstream by total internal reflectance.

In certain aspects, the system may also include a light source configured to direct light to an assay region of the flow channel. The system may include a detector configured to receive a signal from an assay region of the flow channel, wherein the signal is provided by the fluorescent composition. Optionally further, the sample analysis system may include one or more additional detectors and/or light sources for the detection of one or more additional signals. In certain aspects, the system may further include computer-based systems configured to detect the presence of the fluorescent signal. The subject systems may include a number of additional components, such as data output devices, e.g., monitors and/or speakers, data input devices, e.g., interface ports, keyboards, etc., fluid handling components, power sources, etc.

Flow cytometers of interest which may be modified to include a continuously moving container relative to a droplet sort location in accordance with embodiments of the invention (e.g., as described above), include, but are not limited, those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, flow cytometry systems of interest include BD Biosciences FACSCanto^{™} flow cytometer, BD Biosciences FACSVantage^{™}, BD Biosciences FACSort^{™}, BD Biosciences FACSCount^{™}, BD Biosciences FACScan^{™}, and BD Biosciences FACSCalibur^{™} systems, a BD Biosciences Influx^{™} cell sorter, BD ACCURI^{™} C6, BD FACSVERSE^{™}, BD LSRFORTESSA^{™} X-20, BD LSRFORTESSA^{™}, BD Biosciences Jazz^{™} cell sorter and BD Biosciences Aria^{™} cell sorter or the like.

In certain embodiments, the subject systems are flow cytometer systems which incorporate one or more components of the flow cytometers described in U.S. Patent No. 3,960,449; 4,347,935; 4,667,830; 4,704,891; 4,770,992; 5,030,002; 5,040,890; 5,047,321; 5,245,318; 5,317,162; 5,464,581; 5,483,469; 5,602,039; 5,620,842; 5,627,040; 5,643,796; 5,700,692; 6,372,506;6,809,804; 6,813,017; 6,821,740; 7,129,505; 7,201,875; 7,544,326; 8,140,300; 8,233,146; 8,753,573; 8,975,595; 9,092,034; 9,095,494 and 9,097,640.

### METHODS

As summarized above, aspects of the invention include methods for sorting cells into a container using the subject systems. In some embodiments, the method includes: loading a sample including cells into a system for sorting cells, e.g., as described above, and sorting the cells while operating the system such that the system operates to move the support stage continuously in two dimensions and to send the deflection signal to the cell sorter when the container is aligned with the deflected droplet receiving location.

Any convenient protocol may be utilized to load a sample into a system for sorting cells (e.g., as described herein). In some cases, the system is a flow cytometer and loading the sample includes introducing the sample into a flow stream of the flow cytometer. Any convenient samples that include (or are suspected of including) cells of interest may be targeted for sorting using the subject systems. Cells of interest may be targeted for separation from the flow stream of a cell sorter according to a variety of parameters, such as a phenotypic characteristic identified via the attachment of a particular fluorescent label to cells of interest. In some embodiments, the system is configured to deflect analyzed droplets that are determined to include a target cell. A variety of cells may be targeted for sorting using the subject methods. Target cells of interest include, but are not limited to, stem cells, T cells, dendritic cells, B Cells, granulocytes, leukemia cells, lymphoma cells, virus cells (e.g., HIV cells) NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoetic progenitor cells (CD34+) from whole blood, bone marrow or cord blood.

The subject methods include sorting the cells while operating the subject system (e.g., as described herein). The system may operate partially or fully automatically. In some instances, the system operates to move the support stage continuously in two dimensions and to send the deflection signal to the cell sorter when the container is aligned with the deflected droplet receiving location. By "automatic" is meant that the continuous movement of the support stage and the deflection of droplets from the cell sorter requires little to no human intervention or manual input. In some embodiments, systems of interest may be partially or fully automated so that the continuous movement of the support stage and the deflection of droplets from the cell sorter are processor controlled. In certain embodiments, the subject systems are configured to synchronize the continuous movement of the support stage and the deflection of droplets from the cell sorter without any human input. In certain instances, human input may include selecting a multi-well tray to be mounted on the support stage and determining a spatial trajectory for the support stage (see e.g., figure 3 and figure 2).

In certain embodiments of the method, the system operates to determine a timeslot during which the container is aligned with the deflected droplet receiving location. In some instances of the method, the deflection signal includes an initial deflection sub-signal and a final deflection sub-signal; and the system operates to produce the deflection signal by sending an initial deflection sub-signal to the cell sorter at the beginning of the timeslot that configures the deflector to deflect an analyzed droplet, when present. In certain cases of the method, the system operates to send a final deflection sub-signal to the cell sorter at the end of the timeslot that configures the deflector not to deflect an analyzed droplet. In some embodiments of the method, the system operates to send a final deflection sub-signal to the cell sorter after a single analyzed droplet has been deflected during the timeslot, where the final deflection sub-signal configures the deflector not to deflect an analyzed droplet. In certain embodiments of the method, the support stage includes two or more containers; and the method includes automatically and continuously moving the support stage in the X-Y plane to sequentially aligning the two or more containers with the deflected droplet receiving location in the Z dimension, thereby collecting analyzed cells in the two or more containers. In certain instances of the method, the support stage includes 12 or more containers.

In some instances of the method, the analyzed stream of droplets is determined to include a sorted target cell. In certain embodiments of the method, the cell sorter deflects an analyzed droplet only when a target cell is determined to be present. In certain instances, the method includes deflecting a single droplet into each of the two or more containers. In certain cases, the method includes collecting a single target cell in each of the 12 or more containers.

In some embodiments of the method, the system operates to match the length and/or frequency of the timeslot(s) with the frequency of deflected droplets whereby the cell sorter is determined to deflect a single drop during the timeslot. In certain cases, the method further includes adjusting the velocity of the support stage in response to a change in the frequency of deflected droplets from the cell sorter.

In some instances, the elapsed time to sort cells into the 6 or more containers (such as 12 or more, 24 or more, 48 or more, 96 or more, or 384 or more discrete containers) is at least 2 times faster than a control method including moving the support stage with a discontinuous motion of the same velocity (e.g., with a stop and go motion as described in figure 4 where, when the stage is moving, it moves with the same velocity as the continuously moving stage), such as at least 3 times faster, 5 times faster or even 10 times faster than the control method. By "elapsed time" is meant the time it takes the support stage to move from a position of alignment between the first well and the receiving location to a position of alignment with the last 'well' of a multi-well tray.

In certain embodiments of the method, the method further includes detecting and/or analyzing the target cell. In some instances, the method further includes flow cytometrically analyzing the target cell. Detecting the cell in a flow cytometer may include exciting a fluorescent dye with one or more lasers at an interrogation point of the flow cytometer, and subsequently detecting fluorescence emission from the dye using one or more optical detectors. It may be desirable, in addition to detecting the particle, to determine the number of particles (e.g., cells) sorted or separated. Accordingly, in some embodiments, the methods further include counting and/or sorting the labeled particle (e.g., target cell). In detecting, counting and/or sorting particles, a liquid medium including the particles is first introduced into the flow path of the flow cytometer. When in the flow path, the particles are passed substantially one at a time through one or more sensing regions (e.g., an interrogation point), where each of the particles is exposed individually to a source of light at a single wavelength and measurements of light scatter parameters and/or fluorescent emissions as desired (e.g., two or more light scatter parameters and measurements of one or more fluorescent emissions) are separately recorded for each particle. The data recorded for each particle is analyzed in real time or stored in a data storage and analysis means, such as a computer, as desired. U.S. Pat. No. 4,284,412 describes the configuration and use of a flow cytometer of interest equipped with a single light source while U.S. Pat. No. 4,727,020 describes the configuration and use of a flow cytometer equipped with two light sources. Flow cytometers having more than two light sources may also be employed.

More specifically, in a flow cytometer, the particles are passed, in suspension, substantially one at a time in a flow path through one or more sensing regions (or "interrogation points") where in each region each particle is illuminated by an energy source. The energy source may include an illuminator that emits light of a single wavelength, such as that provided by a laser (e.g., He/Ne or argon) or a mercury arc lamp with appropriate filters. For example, light at 488 nm may be used as a wavelength of emission in a flow cytometer having a single sensing region. For flow cytometers that emit light at two distinct wavelengths, additional wavelengths of emission light may be employed, where specific wavelengths of interest include, but are not limited to: 535 nm, 635 nm, and the like.

In series with a sensing region, detectors, e.g., light collectors, such as photomultiplier tubes (or "PMT"), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (or FSC), orthogonal light scatter (SSC), and fluorescence emissions (FL1, FL2, etc.) include a separate parameter for each particle (or each "event"). Thus, for example, two, three or four parameters can be collected (and recorded) from a particle labeled with two different fluorescence markers.

Accordingly, in flow cytometrically assaying the particles, the particles may be detected and uniquely identified by exposing the particles to excitation light and measuring the fluorescence of each particle in one or more detection channels, as desired. The excitation light may be from one or more light sources and may be either narrow or broadband. Examples of excitation light sources include lasers, light emitting diodes, and arc lamps. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Flow cytometers further include data acquisition, analysis and recording means, such as a computer, wherein multiple data channels record data from each detector for the light scatter and fluorescence emitted by each particle as it passes through the sensing region. The purpose of the analysis system is to classify and count particles wherein each particle presents itself as a set of digitized parameter values. In flow cytometrically assaying (e.g., detecting, counting and/or sorting) particles in methods of the invention, the flow cytometer may be set to trigger on a selected parameter in order to distinguish the particles of interest from background and noise. "Trigger" refers to a preset threshold for detection of a parameter and may be used as a means for detecting passage of a particle through the laser beam. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. The flow cytometer operator then selects the desired subpopulation of particles (i.e., those cells within the gate) and excludes particles that are not within the gate. Where desired, the operator may select the gate by drawing a line around the desired subpopulation using a cursor on a computer screen. Only those particles within the gate are then further analyzed by plotting the other parameters for these particles, such as fluorescence.

Flow cytometric analysis of the particles, as described above, yields qualitative and quantitative information about the particles. Where desired, the above analysis yields counts of the particles of interest in the sample. As such, the above flow cytometric analysis protocol provides data regarding the numbers of one or more different types of particles in a sample.

### UTILITY

The subject systems, methods, and computer readable media as described herein find use in a variety of different applications where it is desirable to automate the collection of particles, such as in the collection of deflected droplets in a multi-well tray in a flow cytometer. The present disclosure also finds use in applications where cells prepared from a biological sample may be desired for research, laboratory testing or for use in therapy. In some embodiments, the subject methods and devices may facilitate the obtaining of individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems facilitate obtaining cells from fluidic or tissue samples to be used in therapy. Methods and devices of the present disclosure allow for separating and collecting cells from a biological sample (e.g., organ, tissue, tissue fragment, fluid) with enhanced efficiency and low cost as compared to traditional flow cytometry systems.

The following examples are offered by way of illustration and not by way of limitation.

### EXPERIMENTAL

### Example 1: Design of System

A system (e.g., 100, figure 1) is designed that includes a sorter instrument (e.g., 101, figure 1), a stage (e.g., 102, figure 1) which bears a container tray and able to move continuously with respect to the sorter, and the controller (e.g., 103, figure 1) that coordinates interaction between the sorter and the stage. Figure 1 depicts a block diagram of the system. The sorter notifies the controller when it is ready to sort. Then the controller initiates the stage's movement. When the stage is in the position where depositing a cell into a specific well is possible and reliable enough, the controller notifies the sorter to divert the drop into the well.

### Stop and Go trajectory

Figure 2 depicts a schematic of a 24-well tray (200) as viewed from the top. The dashed line 201 shows the trajectory of the sorter's nozzle with respect to the tray, in a stop-and-go design. The trajectory starts at the center 202 of well A1 and finishes at D1.

Figure 4 illustrates the displacement of the stage along one axis in a stop-and-go implementation over time. At time 0, the nozzle is located against the center of the first well, A1. It rests there for about 0.75 sec, then in 0.25 sec moves to the center of A2, rests again for 0.75 sec and so on. To process 6 wells, it takes almost 6 sec.

### Continuous trajectory

Figure 3 depicts a schematic of a fragment of a 24-well tray (300) and a fragment of the trajectory (dashed line 301) of the nozzle in an embodiment of the invention. This fragment of the trajectory starts at point 302, to the left of well A1 and extends past the well A6. Shaded areas 304 mark the regions where depositing a drop into the well is possible and reliable. When nozzle is located inside such areas, the sorter gets command from the controller enabling the deposition.

Figure 5 illustrates a continuous displacement trajectory of the stage along one axis over time. The nozzle starts at the left edge of well A1 and moves continuously to the right edge of well A6 (see Figure 3), with the same speed as it moves in the stop-and-go implementation depicted in figure 4. It takes four times less time, 1.5 sec, to process 6 wells. Region 501 on the vertical axis between the two dashed lines shows a displacement range where depositing cells into well A4 (y axis) is reliable. Region 502 on the horizontal axis between the two dashed lines shows the corresponding time interval, approximately 0.5 sec, where depositing cells into well A4 (y axis) is reliable.

## Claims

1. A system (100) for sorting cells, the system comprising:
a cell sorter (101) configured to produce an analyzed stream of droplets and comprising a deflector capable of deflecting an analyzed droplet from the analyzed stream of droplets to a deflected droplet receiving location;
a support stage (102) comprising a container and configured to continuously move in two dimensions; and
a processor operably coupled to a memory that includes instructions stored thereon to determine the alignment of the container of a continuously moving support stage with the deflected droplet receiving location and send a deflection signal to the cell sorter when the container is aligned with the deflected droplet receiving location, wherein the memory comprises instructions for determining a timeslot during which the container is aligned with the deflected droplet receiving location, **characterized in that** it is based on the velocity of movement of the support stage and the spatial pathway in an x-y plane of the support stage.

2. The system (100) according to Claim 1, wherein the deflection signal comprises an initial deflection sub-signal and a final deflection sub-signal; and the memory comprises instructions for producing the deflection signal by sending an initial deflection sub-signal to the cell sorter (101) at the beginning of the timeslot that configures the deflector to deflect an analyzed droplet, when present.

3. The system (100) according to Claim 2, wherein the instructions for producing the deflection signal further comprise sending a final deflection sub-signal to the cell sorter (101) at the end of the timeslot that configures the deflector not to deflect an analyzed droplet.

4. The system (100) according to Claim 2, wherein the instructions for producing the deflection signal further comprise sending a final deflection sub-signal to the cell sorter (101) after a single analyzed droplet has been deflected during the timeslot, wherein the final deflection signal configures the deflector not to deflect an analyzed droplet.

5. The system (100) according to any of the preceding claims, wherein the memory comprises an algorithm for determining a frequency of deflected droplets from the cell sorter (101).

6. The system (100) according to Claim 5, wherein the memory comprises an algorithm for matching the length of the timeslot with the frequency of deflected droplets whereby the cell sorter (101) is determined to deflect a single drop during the timeslot.

7. The system (100) according to Claim 6, wherein the memory comprises instructions for automatically adjusting the velocity of the support stage (102) in response to a change in the frequency of deflected droplets from the cell sorter (101).

8. The system (100) according to any of the preceding claims, wherein the support stage (102) comprises two or more containers and the system (100) is configured to automatically and sequentially align the two or more containers with the deflected droplet receiving location in the Z dimension via continuous movement of the support stage in the X-Y plane.

9. The system (100) according to any of the preceding claims, wherein the system (100) is configured to deflect analyzed droplets that are determined to include a target cell.

10. The system (100) according to Claim 1, wherein the system (100) is configured to deflect a single droplet into the container.

11. The system (100) according to any of the preceding claims, wherein the stage (102) comprises two or more containers configured as a multi-well tray.

12. The system (100) according to any of the preceding claims, wherein the system is a flow cytometer system.

13. A method for sorting cells into a container, the method comprising:
(a) loading a sample comprising cells into a system (100) for sorting cells, according to any of the preceding claims
and
(b) sorting the cells while operating the system (100) such that the system operates (100) to move the support stage continuously in two dimensions and to send the deflection signal to the cell sorter when the container is aligned with the deflected droplet receiving location.

## Patentansprüche

1. System (100) zum Sortieren von Zellen, wobei das System Folgendes umfasst:
einen Zellsortierer (101), der so konfiguriert ist, dass er einen analysierten Tröpfchenstrom erzeugt, und einen Ablenker umfasst, der in der Lage ist, ein analysiertes Tröpfchen aus dem analysierten Tröpfchenstrom zu einer Aufnahmestelle für abgelenkte Tröpfchen abzulenken;
einen Trägertisch (102), der einen Behälter umfasst und so konfiguriert ist, dass er sich kontinuierlich in zwei Dimensionen bewegt; und
einen Prozessor, der betriebsmäßig mit einem Speicher gekoppelt ist, der darauf gespeicherte Anweisungen enthält, um die Ausrichtung des Behälters eines sich kontinuierlich bewegenden Trägertischs mit der Aufnahmestelle für abgelenkte Tröpfchen zu bestimmen und ein Ablenkungssignal an den Zellsortierer zu senden, wenn der Behälter mit der Aufnahmestelle für abgelenkte Tröpfchen ausgerichtet ist, wobei der Speicher Anweisungen zum Bestimmen eines Zeitfensters umfasst, während dessen der Behälter auf die Aufnahmestelle für abgelenkte Tröpfchen ausgerichtet ist,
**dadurch gekennzeichnet, dass** es auf der Bewegungsgeschwindigkeit des Trägertisches und dem räumlichen Weg in einer x-y-Ebene des Trägertisches basiert.

2. System (100) nach Anspruch 1, wobei das Ablenkungssignal ein anfängliches Ablenkungsuntersignal und ein endgültiges Ablenkungsuntersignal umfasst, und der Speicher Anweisungen enthält zum Erzeugen des Ablenkungssignals durch Senden eines anfänglichen Ablenkungsuntersignals an den Zellsortierer (101) zu Beginn des Zeitfensters,welches Signal den Ablenker so konfiguriert, dass er ein analysiertes Tröpfchen, sofern vorhanden, ablenkt.

3. System (100) nach Anspruch 2, wobei die Anweisungen zum Erzeugen des Ablenkungssignals ferner das Senden eines endgültigen Ablenkungsuntersignals an den Zellsortierer (101) am Ende des Zeitfensters umfassen, das den Ablenker so konfiguriert, dass er ein analysiertes Tröpfchen nicht ablenkt.

4. System (100) nach Anspruch 2, wobei die Anweisungen zum Erzeugen des Ablenkungssignals ferner das Senden eines endgültigen Ablenkungsuntersignals an den Zellsortierer (101) umfassen, nachdem ein einzelnes analysiertes Tröpfchen während des Zeitfensters abgelenkt wurde, wobei das endgültige Ablenksignal den Ablenker so konfiguriert, dass er ein analysiertes Tröpfchen nicht ablenkt.

5. System (100) nach einem der vorhergehenden Ansprüche, wobei der Speicher einen Algorithmus zum Bestimmen einer Häufigkeit von aus dem Zellsortierer (101) stammenden abgelenkten Tröpfehen umfasst.

6. System (100) nach Anspruch 5, wobei der Speicher einen Algorithmus zum Anpassen der Länge des Zeitfensters an die Häufigkeit abgelenkter Tröpfchen umfasst, wodurch bestimmt wird, dass der Zellsortierer (101) einen einzelnen Tropfen während des Zeitfensters ablenkt.

7. System (100) nach Anspruch 6, wobei der Speicher Anweisungen zum automatischen Anpassen der Geschwindigkeit des Trägertisches (102) als Reaktion auf eine Änderung der Häufigkeit von aus dem Zellsortierer (101) stammenden abgelenkten Tröpfchen umfasst.

8. System (100) nach einem der vorhergehenden Ansprüche, wobei der Trägertisch (102) zwei oder mehr Behälter umfasst und das System (100) so konfiguriert ist, dass es die zwei oder mehr Behälter durch kontinuierliche Bewegung des Trägertisches in der X-Y-Ebene automatisch und nacheinander an der Aufnahmestelle für abgelenkte Tröpfchen in der Z-Dimension ausrichtet.

9. System (100) nach einem der vorhergehenden Ansprüche, wobei das System (100) so konfiguriert ist, dass es analysierte Tröpfchen ablenkt, bei denen bestimmt wurde, dass sie eine Zielzelle enthalten.

10. System (100) nach Anspruch 1, wobei das System (100) so konfiguriert ist, dass es einen einzelnen Tropfen in den Behälter ablenkt.

11. System (100) nach einem der vorhergehenden Ansprüche, wobei der Tisch (102) zwei oder mehr Behälter umfasst, die als Multi-Well-Platte konfiguriert sind.

12. System (100) nach einem der vorhergehenden Ansprüche, wobei es sich bei dem System um ein Durchflusszytometersystem handelt.

13. Verfahren zum Sortieren von Zellen in einen Behälter, wobei das Verfahren Folgendes umfasst:
(a) Laden einer Probe, die Zellen umfasst, in ein System (100) zum Sortieren von Zellen nach einem der vorhergehenden Ansprüche, und
(b) Sortieren der Zellen während des Betriebs des Systems (100), so dass das System (100) den Trägertisch kontinuierlich in zwei Dimensionen bewegt und das Ablenksignal an den Zellsortierer sendet, wenn der Behälter mit der Aufnahmestelle für abgelenkte Tröpfchen ausgerichtet ist.

## Revendications

1. Système (100) de tri de cellules, le système comprenant :
un trieur de cellules (101) conçu pour produire un flux analysé de gouttelettes et comprenant un déflecteur apte à dévier une gouttelette analysée dudit flux analysé de gouttelettes vers un emplacement de réception de gouttelette analysée,
un étage de support (102) comprenant un récipient et conçu pour se déplacer continûment selon deux dimensions, et
un processeur couplé de manière fonctionnelle à une mémoire dans laquelle sont stockées des instructions permettant de déterminer l'alignement du récipient d'un étage de support, en déplacement continu, par rapport à l'emplacement de réception de gouttelette analysée et d'envoyer un signal de déviation au trieur de cellules lorsque le récipient est aligné par rapport à l'emplacement de réception de gouttelette analysée, ladite mémoire comprenant des instructions permettant de déterminer un créneau temporel pendant lequel le récipient est aligné par rapport à l'emplacement de réception de gouttelette analysée ;
**caractérisé en ce que** cela repose sur la vitesse du déplacement de l'étage de support et sur la trajectoire spatiale dans un plan x-y de l'étage de support.

2. Système (100) selon la revendication 1, dans lequel le signal de déviation comprend un sous-signal de déviation initial et un sous-signal de déviation final ; et la mémoire comprend des instructions permettant de produire le signal de déviation par envoi, au trieur de cellules (101) au commencement du créneau temporel, d'un sous-signal de déviation initial qui configure le déflecteur de façon qu'il dévie une gouttelette analysée, le cas échéant.

3. Système (100) selon la revendication 2, dans lequel les instructions permettant de produire le signal de déviation comprennent en outre l'envoi, au trieur de cellules (101) à la fin du créneau temporel, d'un sous-signal de déviation final qui configure le déflecteur de façon qu'il ne dévie pas une gouttelette analysée.

4. Système (100) selon la revendication 2, dans lequel les instructions permettant de produire le signal de déviation comprennent en outre l'envoi d'un sous-signal de déviation final au trieur de cellules (101) après qu'une seule gouttelette analysée a été déviée pendant ledit créneau, le signal de déviation final configurant le déflecteur de façon qu'il ne dévie pas une gouttelette analysée.

5. Système (100) selon l'une quelconque des revendications précédentes, dans lequel la mémoire comprend un algorithme permettant de déterminer la fréquence des gouttelettes déviées en provenance du trieur de cellules (101).

6. Système (100) selon la revendication 5, dans lequel la mémoire comprend un algorithme permettant de faire correspondre la longueur du créneau temporel avec la fréquence des gouttelettes déviées, moyennant quoi il est déterminé que le trieur de cellules (101) dévie une seule goutte pendant ledit créneau.

7. Système (100) selon la revendication 6, dans lequel la mémoire comprend des instructions permettant de régler automatiquement la vitesse de l'étage de support (102) en réaction à un changement de fréquence des gouttelettes déviées en provenance du trieur de cellules (101).

8. Système (100) selon l'une quelconque des revendications précédentes, dans lequel l'étage de support (102) comprend au moins deux récipients et le système (100) est conçu pour aligner automatiquement et séquentiellement lesdits au moins deux récipients par rapport à l'emplacement de réception de gouttelette analysée selon la dimension Z par le biais d'un mouvement continu de l'étage de support selon le plan X-Y.

9. Système (100) selon l'une quelconque des revendications précédentes, dans lequel le système (100) est conçu pour dévier les gouttelettes analysées dont il a été déterminé qu'elles contiennent une cellule cible.

10. Système (100) selon la revendication 1, dans lequel le système (100) est conçu pour dévier une seule gouttelette vers le récipient.

11. Système (100) selon l'une quelconque des revendications précédentes, dans lequel l'étage (102) comprend au moins deux récipients conçus sous la forme d'une plaque multi-puits.

12. Système (100) selon l'une quelconque des revendications précédentes, dans lequel le système est un système de cytométrie en flux.

13. Procédé de tri de cellules vers un récipient, le procédé comprenant :
(a) le chargement d'un échantillon comprenant des cellules dans un système (100) de tri de cellules selon l'une quelconque des revendications précédentes, et
(b) le tri des cellules pendant l'exploitation du système (100) de telle façon que le système (100) entraîne un déplacement continu de l'étage de support selon deux dimensions et un envoi du signal de déviation au trieur de cellules lorsque le récipient est aligné par rapport à l'emplacement de réception de gouttelette analysée.
